# EUROPÄISCHE PATENTSCHRIFT

(11) **EP 2 870 055 B1**
(45) Veröffentlichungstag und Bekanntmachung des Hinweises auf die Patenterteilung: **12.10.2016**
(21) Anmeldenummer: 13727169.8
(22) Anmeldetag: 06.06.2013
(51) Int. Cl.: B62D 21/02, B62D 21/11

(54) **KRAFTFAHRZEUG MIT EINEM FAHRZEUGRAHMEN**
MOTOR VEHICLE WITH A VEHICLE FRAME
VÉHICULE AUTOMOBILE MUNI D'UN CHÂSSIS DE VÉHICULE

(30) Priorität: 03.07.2012 DE 102012013148
(43) Veröffentlichungstag der Anmeldung: 13.05.2015
(73) Patentinhaber: ZF Friedrichshafen AG, 88046 Friedrichshafen (DE)
(72) Erfinder: SCHEPER, Frank, 49624 Loeningen (DE); EISMANN, Jens, 49326 Melle (DE); KNOPP, Sören, 32351 Stemwede (DE); LANGHORST, Friedhelm, 49356 Diepholz (DE)
(86) Internationale Anmeldenummer: PCT/EP2013/061651
(87) Internationale Veröffentlichungsnummer: WO 2014/005786

(56) Entgegenhaltungen:
- EP-A2- 1 829 767
- EP-A2- 2 246 240
- WO-A1-2010/074613
- US-A1- 2008 007 096

## Beschreibung

Die Erfindung betrifft ein Kraftfahrzeug wie z.B. WO2010/074613 A1, insbesondere einen Nutzkraftwagen (NKW), mit einem Fahrzeugrahmen, der insbesondere quer und/oder längs zur Fahrtrichtung stehende Kontaktflächen als Verbindungsflächen zu weiteren Baueinheiten aufweist, die über die Kontaktflächen durchsetzende Verbindungsmittel angebunden sind, nach dem Oberbegriff des Anspruchs 1.

Die meisten Schrauben, die im Fahrwerksbereich Baueinheiten gegenüber Fahrzeugrahmen halten, werden auf Schub (Scherung) parallel zu den Kontaktflächen zwischen Rahmenteil und angebundener Baueinheit - und damit quer zur Schraubenachse - belastet. Etwa beim Bremsen oder Beschleunigen ergeben sich hohe Kräfte in Fahrzeuglängsrichtung, die an längs stehenden und miteinander verschraubten Kontaktflächen die dortigen Schrauben in einer abscherenden Richtung beaufschlagen, da diese Schrauben die Kontaktflächen lotrecht durchdringen. Mit derartigen Verschraubungen können an der Kontaktfläche nur ca. 10 % der aufgebrachten Schraubkraft als Schubkraft übertragen werden. Diese vorspannende Normalkraft verhindert jedoch, daß sich die an den Kontaktflächen verbundenen Teile in einer Richtung in der Ebene der Kontaktflächen gegeneinander bewegen können. Somit ist es wichtig, eine hinreichend hohe Normalkraft sicherzustellen. Es ist eine große Anzahl Schrauben notwendig, um große Kräfte zu übertragen.

Da jedoch die Reibwerte an den Kontaktflächen hohen Schwankungen unterliegen (It. Literatur ca. um einen Faktor drei), ist es erforderlich, derartige Verbindungen überdimensioniert auszubilden, um ein Lösen der Verbindungen auch unter hoher Krafteinleitung quer zur Achse der Verbindungsmittel und deren Abscheren zuverlässig zu unterbinden. Dies verursacht hohe Materialkosten und zusätzliches Gewicht der Teile. Für gewünschte Leichtbauausbildungen und wegen der Notwendigkeit von kompakteren Bauräumen ist es jedoch notwendig, Verschraubungen hinsichtlich Gewicht und Größe zu optimieren.

Der Erfindung liegt das Problem zugrunde, hier eine Verbesserung zu erreichen.

Die Erfindung löst dieses Problem durch eine Kraftfahrzeug mit den Merkmalen des Anspruchs 1. Zu vorteilhaften Ausgestaltungen und Weiterbildungen der Erfindung wird auf die weiteren Ansprüche 2 bis 14 verwiesen.

Durch die Erfindung ist dadurch, daß an den Kontaktflächen die Achse des jeweiligen Verbindungsmittels die von ihm durchsetzte Kontaktfläche in einem von 90° abweichenden Winkel durchläuft, erreicht, daß die Kraft der Schraubverbindung in eine Normal- und eine Querkomponente unterteilt wird. Es ergibt sich somit ein formschlüssiger Anteil, der es erlaubt, den Anteil der Vorspannung erheblich zu erhöhen. Dadurch kann einerseits die Schraubennenngröße verringert werden, was Materialkosten und Gewicht verringert. Außerdem kann das Anzugsverfahren für die Schraubverbindung deutlich weniger genau gewählt werden, so daß die Verfahrenskosten verringert und die Zuverlässigkeit der Verbindung erhöht sind. Durch die kleinere Schraube kann auch der benötigte Bauraum verringert werden. Optimalerweise werden solche Schraubverbindungen zumindest im wesentlichen nur auf Zug belastet. Zudem können auch an die Oberflächengüte verminderte Anforderungen gestellt werden.

Um eine möglichst hohe Vorspannung zu erzeugen, ist es günstig, wenn die jeweilige Achse des Verbindungsmittels die von ihm durchsetzte Kontaktfläche in einem Winkel zwischen 30° und 60° gegenüber einem in der Kontaktfläche liegenden Vektor durchläuft.

Insbesondere kann für eine optimale Kombination zwischen Kraftschluß und Formschluß die jeweilige Achse des Verbindungsmittels die von ihm durchsetzte Kontaktfläche in einem Winkel von ca. 45° gegenüber einem in der Kontaktfläche liegenden Vektor durchlaufen. Dann sind beispielsweise bei einem Reibwert von µ = 0,1 im Vergleich zu einer Standardverschraubung mit lotrecht zu den Kontaktflächen stehenden Schrauben die zu übertragenden Querkräfte um 700 % erhöht, die Längskräfte im Schraubenspalt sind um 30 % reduziert.

Sofern die Kontaktflächen in Draufsicht gewinkelt zu einer Fahrzeuglängsachse und zu einer Fahrzeugquerachse stehen, wirken auch die Hauptkraftrichtungen zwischen Achse und Fahrzeugrahmen, nämlich Quer- und Längsbewegungen, jeweils abgewinkelt zu den Kontaktflächen und fördern daher weniger das Abscheren der dort verbundenen Teile gegeneinander, so daß eine zusätzliche Sicherheit der Verbindung erreicht ist. Zu einer solchen Sicherheit gegen eine Krafteinwirkung in der Ebene der Kontaktflächen trägt auch bei, wenn die Kontaktflächen mit Riffelungen oder ähnlichen Maßnahmen zur Reibungserhöhung versehen sind.

Insbesondere stehen pro Gelenkanordnung zwei axial außen liegende Kontaktflächen gegenüber einer Fahrzeugquerachse gegensätzlich zueinander angewinkelt und können somit wie äußere Wandungen die dazwischen liegende Gelenkanordnung einfassen.

Besonders günstig für eine hohe Stabilität sind Verbindungsmittel in einer gemeinsamen Ebene, insbesondere Horizontalebene, jeweils paarweise und gegeneinander gewinkelt angeordnet.

Dabei können die Verbindungsmittel symmetrisch zu einem Lot auf den Kontaktflächen und um ca. 90° gegeneinander gewinkelt angeordnet sein, so daß sich für gegensätzliche Krafteinwirkungen - etwa beim Beschleunigen und Bremsen - gleich gute Abstützungen ergeben.

Eine hohe Belastung ergibt sich bei normalen Verschraubungen beispielsweise dort, wo Baueinheiten an Längsträger angebunden sind und die Kontaktflächen somit längs zur Fahrtrichtung stehen. Derartige Baueinheiten können etwa gebildet sein durch an Längsträger angebundenen Querträger gebildet, durch an einen Längsträger angebundenen Träger mit einer Vertikalkomponente, insbesondere zur Halterung einer Achse, einer Federungseinheit oder eines sonstigen Fahrwerkteils, etwa auch eines Luftfederbalgs.

Besonders günstig für eine Einsparung von Verbindungsmitteln und für eine effiziente Montage durchgreifen Befestigungsmittel zur Anbindung der jeweiligen Baueinheit sowohl die Baueinheit als auch einen Längsträger als auch einen Querträger und verbinden diese Teile gleichzeitig miteinander.

Vorteilhaft umfaßt die jeweils angebundene Baueinheit einen Einlaufkanal für ein Befestigungsmittel und ein abgewinkelt zur Achse des Kanals stehendes Widerlager für einen Kopf oder ein Konterglied eines Befestigungsmittels, so daß automatisch die passende Lage des Befestigungsmittels gewährleistet ist und konische Keile oder ähnliche Maßnahmen zur Schrägstellung der Verbindungsmittel entbehrlich sind. Die Längsträger des Fahrzeugs können zum Durchgreifen der Verbindungsmittel beispielsweise einfach Langlöcher aufweisen. Insbesondere ist es günstig, wenn die genannten Widerlager direkt in die Baueinheiten integriert sind.

Weitere Vorteile und Merkmale der Erfindung ergeben sich aus in der Zeichnung dargestellten und nachfolgend beschriebenen Ausführungsbeispielen des Gegenstandes der Erfindung.
In der Zeichnung zeigt:
- Fig. 1: eine schematische Draufsicht auf einen Nutzkraftwagen mit beispielhaft einem seitlich angeordneten Träger von Achskomponenten und mit einem Im Bereich von dessen Anbindung gehaltenen Querträger,
- Fig. 2: eine perspektivische Detailansicht von schräg oben von zwei über einen Querträger verbundenen Längsträgerabschnitten, wobei quer außen zusätzlich Träger von Fahrwerkskomponenten an die Längsträger angebunden und mit dem Querträger verbunden sind,
- Fig. 3: die Anordnung nach Figur 2 in perspektivischer Ansicht von schräg unten,
- Fig. 4: eine perspektivische Detailansicht einer Anbindung einer Baueinheit aus ähnlicher Perspektive wie in Figur 2,
- Fig. 5: die Anordnung nach Figur 4 in Seitenansicht,
- Fig. 6: eine geschnittene Darstellung von oben der Anordnung nach Figur 4,
- Fig. 7: ein Kraft-Weg-Diagramm einer Schrägverschraubung und einer lotrechten Verschraubung,
- Fig. 8: eine Seitenansicht eines Luftfederbalgträgers,
- Fig. 9: den Träger in Ansicht von oben,
- Fig. 10: die Anbindung des Luftfederbalgs in geschnittener Draufsicht.

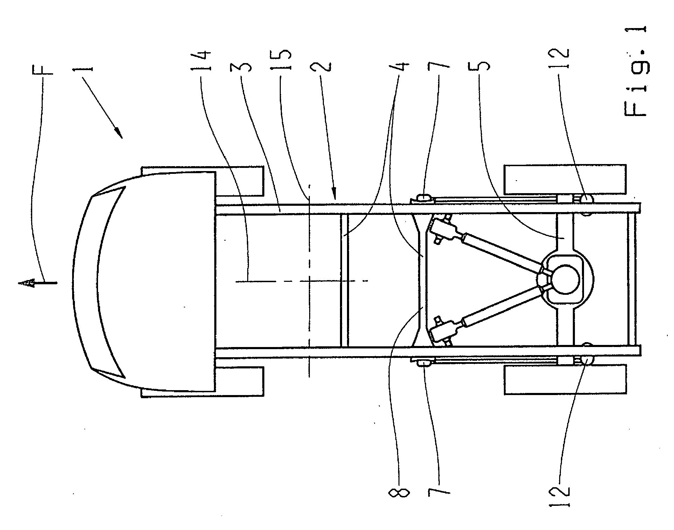

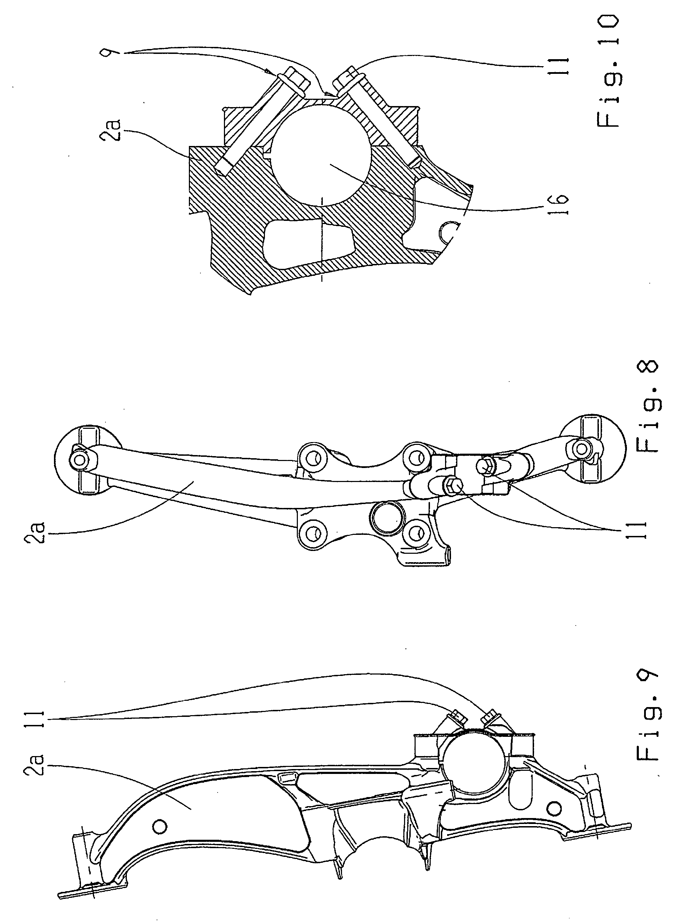

Das in Figur 1 schematisch dargestellte Kraftfahrzeug 1 bildet hier einen Nutzkraftwagen (NKW) aus und weist einen Fahrzeugrahmen 2 und/oder Hilfsrahmen 2a, wie etwa den in Figur 8 gezeigten Luftfederbalgträger, auf. Ein Fahrzeugrahmen 2 kann typisch zwei seitliche Längsträger 3 und mehrere Querträger 4 umfassen und insgesamt unterschiedlich ausgebildet sein. An dem Fahrzeugrahmen 2 ist zumindest eine Achse 5, zum Beispiel eine Hinterachse, gehalten.

Auch beispielsweise ein Baufahrzeug oder ein Offroadfahrzeug kann erfindungsgemäß ausgebildet sein.

An insbesondere quer und/oder längs zur Fahrtrichtung F stehenden Kontaktflächen 10, 10a, die als Verbindungsflächen dienen, können weitere Baueinheiten angebunden sein. Längs stehende Kontaktflächen 10 können beispielsweise durch Außen- oder Innenseiten der Längsträger 3 gebildet sein, quer stehende Kontaktflächen 10a zum Beispiel durch ein erweitertes Differential der Achse 5 oder durch eine Vorder- oder Rückseite eines Querträgers 4.

Die weiteren Baueinheiten sind an diese Kontaktflächen 10, 10a derart angebunden, daß sie über die Kontaktflächen 10, 10a durchsetzende Verbindungsmittel gehalten werden, zum Beispiel gekonterte Schrauben oder ähnliches, wobei die Achse 13 des jeweiligen Verbindungsmittels 11 die von ihm durchsetzte Kontaktfläche 10, 10a in einem von 90° abweichenden Winkel α durchläuft, also schräg zu dieser steht. Statt der gekonterten Schrauben können etwa auch, wie in Figur 10, Sackbohrungen vorgesehen sein, in die Schrauben 11 eingreifen. Auch eine Vernietung oder ein Verstiften kann möglich sein.

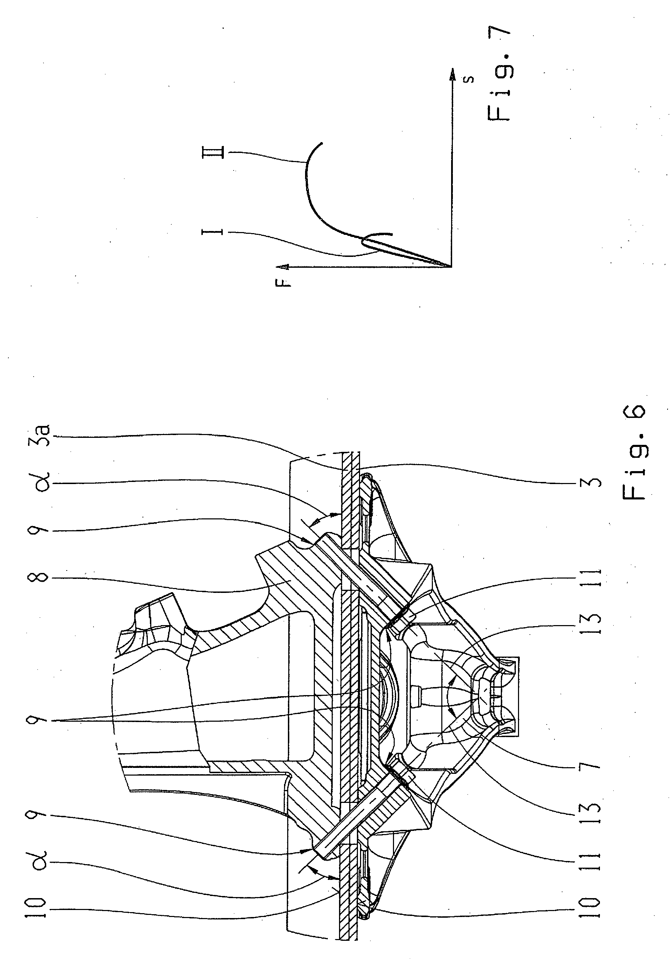

Insbesondere schneidet die jeweilige Achse 13 des Verbindungsmittels 11 die von ihm durchsetzte Kontaktfläche 10, 10a in einem Winkel α zwischen 30° und 60° gegenüber einem in der Kontaktfläche 10, 10a liegenden Vektor. Optimalerweise schneidet die jeweilige Achse 13 des Verbindungsmittels 11 die von ihm durchsetzte Kontaktfläche 10, 10a in einem Winkel von ca. 45° gegenüber einem in der Kontaktfläche 10, 10a liegenden Vektor. Dabei können die Verbindungsmittel 11 in einer gemeinsamen Ebene, insbesondere Horizontalebene, jeweils paarweise und gegeneinander gewinkelt angeordnet sein, wie dies etwa in Figur 6 dargestellt ist. Hier ist ein gemeinsam in einer horizontalen Ebene liegendes Paar von Befestigungsmitteln 11 gezeigt. Mehrere solcher Paare können übereinander oder auch nebeneinander liegen. Der Winkel zwischen den beiden Verbindungsmitteln 11 liegt hier bei ca. 90° gegeneinander, was nicht zwingend ist, jedoch einen optimierten Fall für eine hohe Vorspannung darstellt.

Günstig liegen, wie hier auch dargestellt, die Richtungen der Befestigungsmittel 11 in Draufsicht gewinkelt sowohl zu einer Fahrzeuglängsachse 14 als auch zu einer Fahrzeugquerachse 15, so daß sie nicht in einer Linie zu einer der beiden auftretenden Hauptkraftrichtungen stehen.

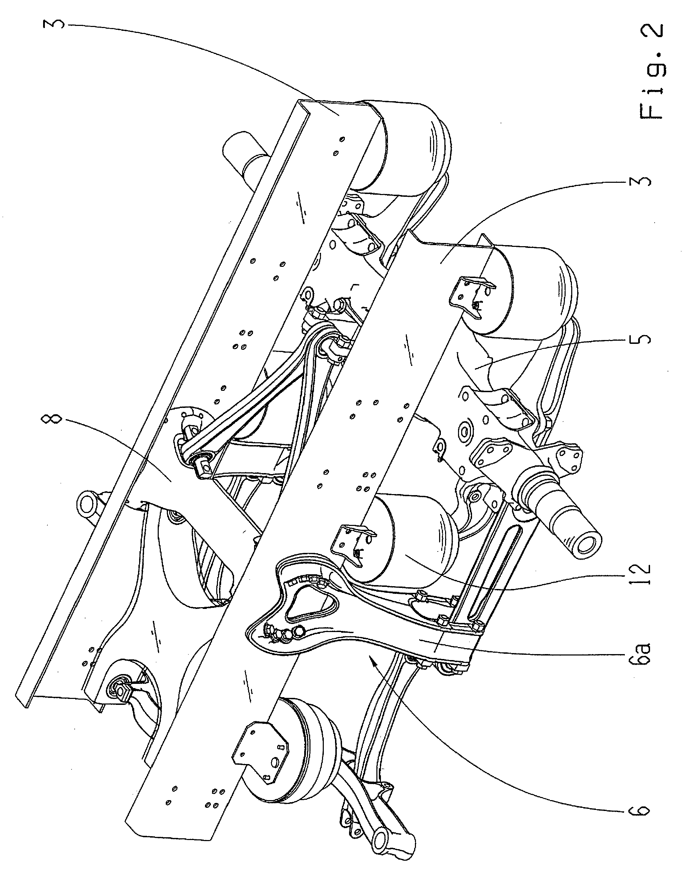

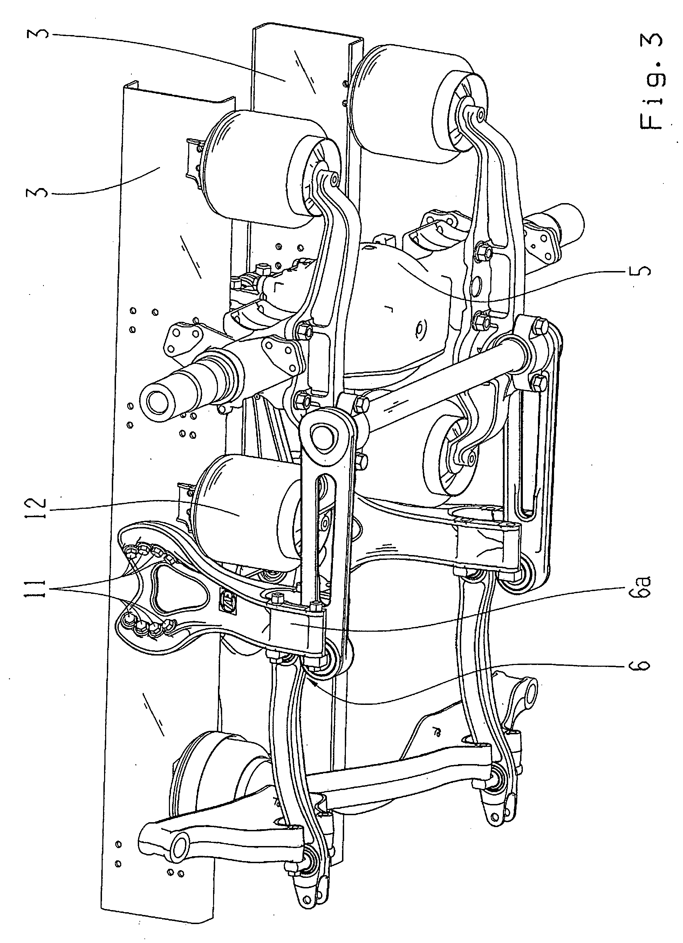

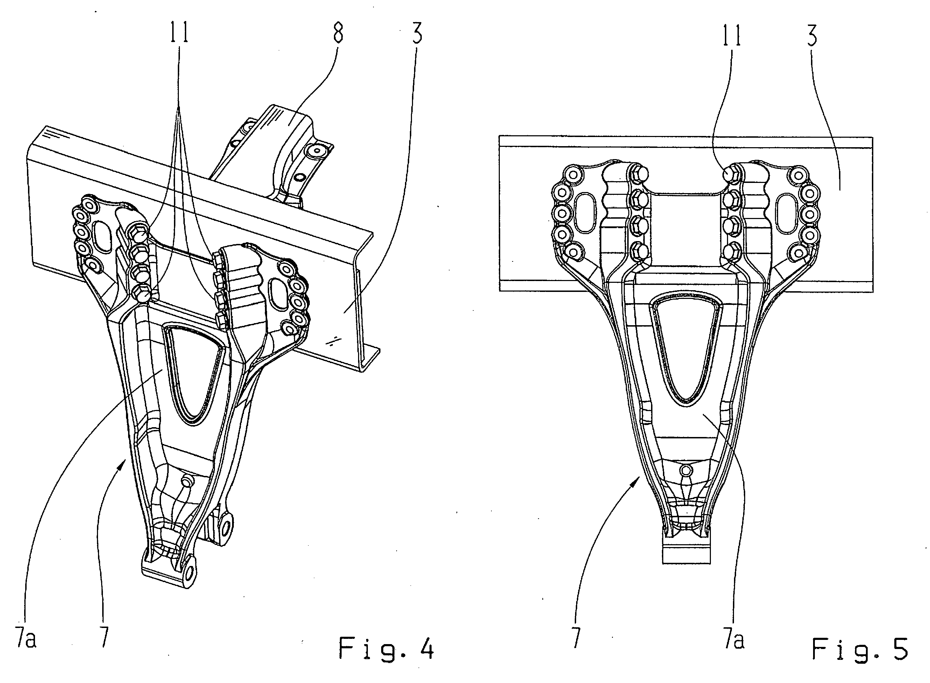

In den Ausführungsbeispielen nach den Figuren 2 und 3 sowie nach den Figuren 4 bis 6 sind Baueinheiten 6 bzw. 7 und 8 an die beiden seitlichen Längsträger 3 des Fahrzeugrahmens 2 angebunden. Dabei ist eine Baueinheit 8 durch einen Querträger 4 gebildet, der die beiden Längsträger 3 miteinander verbindet.

Die angebundenen Baueinheiten 6 bzw. 7 sind jeweils durch einen an einen Längsträger 3 angebundenen Träger 6a bzw. 7a mit einer Vertikalkomponente gebildet und dienen insbesondere zur Halterung einer Achse 5, einer Federungseinheit 11 oder eines sonstigen Fahrwerkteils 12, etwa als Halter eines Luftfederbalgs.

Ein solcher Luftfederbalgträger ist insbesondere auch durch den Hilfsrahmen 2a nach den Figuren 8 bis 10 gezeichnet. Dort ist für den Luftfederbalg - selbst nicht eingezeichnet - ein durch die Befestigungsmittel 11 verschließbares Klemmauge 16 vorgesehen. Die Anbindung muß also nicht zwangsläufig am Fahrzeugrahmen 2 erfolgen, sondern kann sich auch auf einen solchen dem Fahrwerk zugeordneten Hilfsrahmen 2a oder ähnliche Einheiten im Fahrwerk beziehen.

In den Ausführungsbeispielen nach den Figuren 2 bis 6 sind zur Anbindung der jeweiligen Baueinheiten 6 bzw. 7 Befestigungsmittel 11 vorgesehen, die sowohl die Baueinheit 6 bzw. 7 als auch einen Längsträger 3 als auch einen Querträger 8 durchgreifen und alle gleichzeitig miteinander verbinden. Diese Material- und Montageaufwand sparende Bauweise ist insbesondere im Schnitt nach Figur 6 gut zu erkennen. Hier ist der Längsträger 3 quer innenseitig noch mit einem Verstärkungsblech 3a aufgedoppelt, so daß sich daran eine längs verlaufende erste Kontaktfläche 10 zum Querträger 8 anschließt und außen eine zweite längs verlaufende Kontaktfläche 10 zum Angreifen der Baueinheit 7 zur Verfügung steht (sh. z. B. Figur 4).

In Figur 6 ist auch gut zu erkennen, daß die jeweils angebundene Baueinheit 6 bzw. 7 einen Einlaufkanal für ein Befestigungsmittel 11 und ein diesen axial begrenzendes Widerlager 9 für einen Kopf oder ein Konterglied eines Befestigungsmittels 11 umfaßt. Diese Widerlager 9 ist hier vorteilhaft in die Baueinheit 7 integriert, indem dort entsprechende Schrägflächen vorgesehen sind, wie etwa auch in den Figuren 4 und 5 gut erkennbar sind. Separate Keile oder ähnliches sind dadurch entbehrlich. In gleicher Weise ist hier auch der quer innen liegende Querträger 8 mit solchen schräg angestellten Abschlußflächen 9 als Widerlager für einen Schraubenkopf oder eine Mutter bereits integral versehen.

In Figur 7 wird deutlich, daß die Schrauben 11, die durch die Schrägstellung nur auf Zug belastet sind (Kurve II), viel größere Kräfte übertragen als solche, die in Scherrichtung (Kurve I) belastet sind. Durch die Erfindung kann sichergestellt werden, daß gerade bei paarweise einander gewinkelt gegenüber liegenden Schrauben bei Krafteinleitung entlang einer Kontaktfläche 10 bzw. 10a stets auf Zug belastet wird.

Auch eine Dreieckslenkeranordnung (Figur 1) oder eine Vierpunktlenkeranordnung (Figuren 2, 3) kann derart angebunden sein, ebenso weitere mit dem Fahrwerk in Verbindung stehende Teile.

### Bezugszeichen

- 1: Kraftfahrzeug,
- 2: Fahrzeugrahmen,
- 2a: Hilfsrahmen,
- 3: Längsträger,
- 4: Querträger,
- 5: Fahrzeugachse,
- 6: Baueinheit,
- 6a: Träger mit Vertikalkomponente,
- 7: Baueinheit,
- 7a: Träger mit Vertikalkomponente,
- 8: Querträger,
- 9: Widerlager,
- 10: Kontaktflächen,
- 10a: Kontaktflächen,
- 11: Verbindungsmittel,
- 12: Luftfederbalg,
- 13: Achse des Verbindungsmittels,
- 14: Längsachse,
- 15: Querachse,
- 16: Klemmauge

## Patentansprüche

1. Kraftfahrzeug, insbesondere Nutzkraftwagen (NKW), mit einem Fahrzeugrahmen und/oder einem Hilfsrahmen (2;2a), der insbesondere quer und/oder längs zur Fahrtrichtung (F) stehende Kontaktflächen (10;10a) als Verbindungsflächen zu weiteren Baueinheiten (6;7;8;12) aufweist, die über die Kontaktflächen (10;10a) durchsetzende Verbindungsmittel (11) angebunden sind, **dadurch gekennzeichnet, daß** die Achse (13) des jeweiligen Verbindungsmittels (11) die von ihm durchsetzte Kontaktfläche (10;10a) in einem von 90° abweichenden Winkel (α) durchläuft.

2. Kraftfahrzeug (1) nach Anspruch 1, **dadurch gekennzeichnet, daß** die jeweilige Achse (13) des Verbindungsmittels (11) die von ihm durchsetzte Kontaktfläche (10;10a) in einem Winkel (α) zwischen 30° und 60° gegenüber einem in der Kontaktfläche (10;10a) liegenden Vektor durchläuft.

3. Kraftfahrzeug (1) nach Anspruch 2, **dadurch gekennzeichnet, daß** die jeweilige Achse (13) des Verbindungsmittels (11) die von ihm durchsetzte Kontaktfläche (10;10a) in einem Winkel von ca. 45° gegenüber einem in der Kontaktfläche (10;10a) liegenden Vektor durchläuft..

4. Kraftfahrzeug (1) nach einem der Ansprüche 1 bis 3, **dadurch gekennzeichnet, daß** die Verbindungsmittel (11) durch insbesondere gekonterte Schrauben gebildet sind.

5. Kraftfahrzeug (1) nach einem der Ansprüche 1 bis 4, **dadurch gekennzeichnet, daß** die Verbindungsmittel (11) in Draufsicht gewinkelt zu einer Fahrzeuglängsachse (14) und zu einer Fahrzeugquerachse (15) stehen

6. Kraftfahrzeug (1) nach einem der Ansprüche 1 bis 5, **dadurch gekennzeichnet, daß** die Verbindungsmittel (11) in einer gemeinsamen Ebene, insbesondere Horizontalebene, jeweils paarweise und gegeneinander gewinkelt angeordnet sind.

7. Kraftfahrzeug (1) nach Anspruch 6, **dadurch gekennzeichnet, daß** die Verbindungsmittel (11) um ca. 90° gegeneinander gewinkelt angeordnet sind.

8. Kraftfahrzeug nach einem der Ansprüche 1 bis 7, **dadurch gekennzeichnet, daß** die Baueinheiten (6;7;8;12) an Längsträger (3) angebunden sind.

9. Kraftfahrzeug (1) nach einem der Ansprüche 1 bis 8, **dadurch gekennzeichnet, daß** eine angebundene Baueinheit (8) durch einen an Längsträger (3) angebundenen Querträger (4) gebildet ist.

10. Kraftfahrzeug (1) nach einem der Ansprüche 1 bis 9, **dadurch gekennzeichnet, daß** eine angebundene Baueinheit (6;7) einen an einen Längsträger (3) angebundenen Träger (6a;7a) mit einer Vertikalkomponente umfaßt, insbesondere zur Halterung einer Achse (5), einer Federungseinheit (12) oder eines sonstigen Fahrwerkteils.

11. Kraftfahrzeug (1) nach Anspruch 10, **dadurch gekennzeichnet, daß** eine angebundene Baueinheit (2a) einen Halter eines Luftfederbalgs (12) bildet oder umfaßt.

12. Kraftfahrzeug (1) nach einem der Ansprüche 1 bis 11, **dadurch gekennzeichnet, daß** zur Anbindung der jeweiligen Baueinheit (6;7) Befestigungsmittel (11) sowohl die Baueinheit (6;7) als auch einen Längsträger (3) als auch einen Querträger (4) durchgreifen und miteinander verbinden.

13. Kraftfahrzeug (1) nach einem der Ansprüche 1 bis 12, **dadurch gekennzeichnet, daß** die jeweils angebundene Baueinheit (6;7;8) einen Einlaufkanal für ein Befestigungsmittel (11) und ein abgewinkelt, insbesondere rechtwinklig, zur Achse des Kanals stehendes Widerlager (9) für einen Kopf oder ein Konterglied eines Befestigungsmittels (11) umfaßt.

14. Kraftfahrzeug (1) nach Anspruch 13, **dadurch gekennzeichnet, daß** das Widerlager (9) in die Baueinheit (6;7;8) integriert ist.

## Claims

1. Motor vehicle, in particular commercial vehicle (CV), having a vehicle frame and/or a subframe (2; 2a) which has, in particular, contact faces (10; 10a) which lie transversely and/or longitudinally with respect to the driving direction (F) as connecting faces to further components (6; 7; 8; 12) which are attached via connecting means (11) which penetrate the contact faces (10; 10a), **characterized in that** the axis (13) of the respective connecting means (11) runs through the contact face (10; 10a) which is penetrated by it at an angle (α) which differs from 90°.

2. Motor vehicle (1) according to Claim 1, **characterized in that** the respective axis (13) of the connecting means (11) runs through the contact face (10; 10a) which is penetrated by it at an angle (α) between 30° and 60° with respect to a vector which lies in the contact face (10; 10a).

3. Motor vehicle (1) according to Claim 2, **characterized in that** the respective axis (13) of the connecting means (11) runs through the contact face (10; 10a) which is penetrated by it at an angle of approximately 45° with respect to a vector which lies in the contact face (10; 10a).

4. Motor vehicle (1) according to one of Claims 1 to 3, **characterized in that** the connecting means (11) are formed by bolts which, in particular, are fixed by a locknut.

5. Motor vehicle (1) according to one of Claims 1 to 4, **characterized in that**, in plan view, the connecting means (11) lie in an angled manner with respect to a vehicle longitudinal axis (14) and with respect to a vehicle transverse axis (15).

6. Motor vehicle (1) according to one of Claims 1 to 5, **characterized in that** the connecting means (11) are arranged in a common plane, in particular horizontal plane, in each case in pairs and in an angled manner with respect to one another.

7. Motor vehicle (1) according to Claim 6, **characterized in that** the connecting means (11) are arranged in a manner which is angled by approximately 90° with respect to one another.

8. Motor vehicle according to one of Claims 1 to 7, **characterized in that** the components (6; 7; 8; 12) are attached to longitudinal carriers (3).

9. Motor vehicle (1) according to one of Claims 1 to 8, **characterized in that** an attached component (8) is formed by a crossmember (4) which is attached to longitudinal carriers (3).

10. Motor vehicle (1) according to one of Claims 1 to 9, **characterized in that** an attached component (6; 7) comprises a carrier (6a; 7a) which is attached to a longitudinal carrier (3) and has a vertical component, in particular for securing an axle (5), a suspension unit (12) or another chassis part.

11. Motor vehicle (1) according to Claim 10, **characterized in that** an attached component (2a) forms or comprises a holder of an air spring bellows (12).

12. Motor vehicle (1) according to one of Claims 1 to 11, **characterized in that**, in order to attach the respective component (6; 7), fastening means (11) penetrate both the component (6; 7) and a longitudinal carrier (3) and a crossmember (4) and connect them to one another.

13. Motor vehicle (1) according to one of Claims 1 to 12, **characterized in that** the respectively attached component (6; 7; 8) comprises an inlet channel for a fastening means (11) and an abutment (9) for a head or a locking member of a fastening means (11), which abutment (9) lies angled away, in particular at a right angle, with respect to the axis of the channel.

14. Motor vehicle (1) according to Claim 13, **characterized in that** the abutment (9) is integrated into the component (6; 7; 8).

## Revendications

1. Véhicule automobile, en particulier véhicule utilitaire (NKW), comprenant un châssis de véhicule et/ou un châssis auxiliaire (2 ; 2a) qui présente des surfaces de contact (10 ; 10a) disposées notamment transversalement et/ou longitudinalement par rapport à la direction de conduite (F), en tant que surfaces de connexion à d'autres unités constructives (6 ; 7 ; 8 ; 12) qui sont reliées par le biais de moyens de connexion (11) traversant les surfaces de contact (10 ; 10a), **caractérisé en ce que** l'axe (13) du moyen de connexion respectif (11) s'étend à travers la surface de contact (10 ; 10a) qu'il traverse suivant un angle (α) s'écartant de 90°.

2. Véhicule automobile (1) selon la revendication 1, **caractérisé en ce que** l'axe respectif (13) du moyen de connexion (11) s'étend à travers la surface de contact (10 ; 10a) qu'il traverse suivant un angle (α) compris entre 30° et 60° par rapport à un vecteur situé dans la surface de contact (10 ; 10a).

3. Véhicule automobile (1) selon la revendication 2, **caractérisé en ce que** l'axe respectif (13) du moyen de connexion (11) s'étend à travers la surface de contact (10 ; 10a) qu'il traverse suivant un angle d'environ 45° par rapport à un vecteur situé dans la surface de contact (10 ; 10a).

4. Véhicule automobile (1) selon l'une quelconque des revendications 1 à 3, **caractérisé en ce que** les moyens de connexion (11) sont formés par des vis notamment bloquées.

5. Véhicule automobile (1) selon l'une quelconque des revendications 1 à 4, **caractérisé en ce que** les moyens de connexion (11), en vue de dessus, sont inclinés par rapport à un axe longitudinal du véhicule (14) et par rapport à un axe transversal du véhicule (15).

6. Véhicule automobile (1) selon l'une quelconque des revendications 1 à 5, **caractérisé en ce que** les moyens de connexion (11) sont disposés dans un plan commun, en particulier un plan horizontal, à chaque fois par paires et de manière inclinée les uns par rapport aux autres.

7. Véhicule automobile (1) selon la revendication 6, **caractérisé en ce que** les moyens de connexion (11) sont disposés de manière inclinée d'environ 90° les uns par rapport aux autres.

8. Véhicule automobile selon l'une quelconque des revendications 1 à 7, **caractérisé en ce que** les unités constructives (6 ; 7 ; 8 ; 12) sont reliées à des longerons (3).

9. Véhicule automobile (1) selon l'une quelconque des revendications 1 à 8, **caractérisé en ce qu'**une unité constructive reliée (8) est formée par une traverse (4) reliée à un longeron (3).

10. Véhicule automobile (1) selon l'une quelconque des revendications 1 à 9, **caractérisé en ce qu'**une unité constructive reliée (6 ; 7) comprend un support (6a ; 7a) relié à un longeron (3) avec une composante verticale, en particulier pour retenir un essieu (5), une unité de suspension (12) ou une autre pièce du châssis.

11. Véhicule automobile (1) selon la revendication 10, **caractérisé en ce qu'**une unité constructive reliée (2a) forme ou comprend un support d'un souffle de ressort pneumatique (12).

12. Véhicule automobile (1) selon l'une quelconque des revendications 1 à 11, **caractérisé en ce que** pour relier l'unité constructive respective (6 ; 7), des moyens de fixation (11) viennent en prise à la fois à travers l'unité constructive (6 ; 7), un longeron (3) et une traverse (4), et les relie les uns aux autres.

13. Véhicule automobile (1) selon l'une quelconque des revendications 1 à 12, **caractérisé en ce que** l'unité constructive respective reliée (6 ;7 ; 8) comprend un canal d'entrée pour un moyen de fixation (11) et une butée (9) coudée, en particulier à angle droit par rapport à l'axe du canal, pour une tête ou un organe conjugué d'un moyen de fixation (11).

14. Véhicule automobile (1) selon la revendication 13, **caractérisé en ce que** la butée (9) est intégrée dans l'unité constructive (6 ; 7 ; 8).
